# EUROPÄISCHE PATENTSCHRIFT

(11) **EP 0 892 895 B1**
(45) Veröffentlichungstag und Bekanntmachung des Hinweises auf die Patenterteilung: **15.12.1999**
(21) Anmeldenummer: 97921710.6
(22) Anmeldetag: 23.04.1997
(51) Int. Cl.: F16D 48/06

(54) **STEUERUNG, INSBESONDERE NOTSTEUERUNG, EINER AUTOMATISCHEN KUPPLUNG**
CONTROL SYSTEM, IN PARTICULAR EMERGENCY CONTROL SYSTEM, OF AN AUTOMATIC CLUTCH
COMMANDE, NOTAMMENT COMMANDE D'URGENCE, D'UN EMBRAYAGE AUTOMATIQUE

(30) Priorität: 02.05.1996 DE 19617567
(43) Veröffentlichungstag der Anmeldung: 27.01.1999
(73) Patentinhaber: LUK Getriebe-Systeme GmbH, 77815 Bühl (DE); DaimlerChrysler AG, 70567 Stuttgart (DE)
(72) Erfinder: KOSIK, Franz, D-73760 Ostfildern (DE); SALECKER, Michael, D-77815 Bühl (DE); ZIMMERMANN, Martin, D-77880 Sasbach 2 (DE)
(74) Vertreter: Patentanwalts-Partnerschaft Rotermund + Pfusch
(86) Internationale Anmeldenummer: EP9702054
(87) Internationale Veröffentlichungsnummer: WO9742428

(56) Entgegenhaltungen:
- DE-A- 3 421 387
- DE-A- 3 443 015
- DE-A- 4 237 983
- DE-A- 4 326 862
- GB-A- 2 113 341

## Beschreibung

Die Erfindung betrifft die Steuerung einer im Antriebstrang eines Kraftfahrzeuges mit fahrerseitig bzw. manuell geschaltetem Getriebe angeordneten automatischen Kupplung, zu deren Betätigung die Steuerung mit einer Sensorik zur Erkennung von Parametern, die auf eine Schaltabsicht des Fahrers hindeuten, zusammenwirkt, wobei die Kupplung zumindest im Falle einer Notsteuerung bei gestörter Sensorik bei sich schließender Drosselklappe des Fahrzeugmotors öffnet und bei sich öffnender Drosselklappe schließt, und wobei zumindest im Falle dieser Notsteuerung der Kupplung außerdem Signale eines dem Fahrzeugmotor zugeordneten, die Drehzahl des Fahrzeugmotors erfassenden Drehzahlsensors zur Kupplungssteuerung heranziehbar sind.

In der DE 42 37 983 A1 wird eine derartige Kupplungssteuerung beschrieben, wobei verschiedenartige Störungen der Sensorik betrachtet werden. In diesem Zusammenhang ist vorgesehen, bei Ausfall eines Motordrehzahlsensors oder bei Ausfall eines Fahrpedalsensors in eine Not-Betriebsart umzuschalten, wobei die Kupplung beim Schließen in Abhängigkeit von der Größe der vom Fahrpedalsensor erfaßten Auslenkung des Fahrpedales gesteuert wird, wenn der Motordrehzahlsensor ausgefallen ist, bzw. in Abhängigkeit von der Größe der vom Motordrehzahlsensor erfaßten Motordrehzahl gesteuert wird, wenn der Fahrpedalsensor gestört ist. Dabei kann im letzteren Fall die Kupplung geschlossen werden, sobald die Motordrehzahl größer als ein vorbestimmter Schwellwert ist, bzw. bei Unterschreitung eines Drehzahlschwellwertes geöffnet werden.

Die DE 43 24 415 A1 zeigt eine weitere Kupplungssteuerung, bei der in Abhängigkeit von einer die jeweilige Drosselklappenstellung erfassenden Sensorik die Kupplung betätigt wird. Dabei ist eine redundante Anordnung vorgesehen, derart, daß bei Störung einer ersten Elektronikanordnung zur Erfassung der Drosselklappenstellung auf eine andere Einrichtung, die sich konstruktiv von der ersten Einrichtung unterscheidet, umgeschaltet wird. Hier wird also durch eine unsymmetrische Redundanz eine hohe Sicherheit gewährleistet.

Die DE 43 26 862 A1 betrifft die Steuerung einer automatischen Kupplung bei ungestörtem Steuersystem. Dabei wird insbesondere der Fall behandelt, daß sich der Fahrer beim Gangwechsel ,,verschaltet", d.h. daß der Fahrer versucht, einen für die jeweilige Fahrgeschwindigkeit zu niedrigen Gang einzulegen. Wenn in einem solchen Falle die Kupplung nach dem Gangwechsel automatisch schließt, kann der Motor beim Einkuppeln infolge der Massenträgheit des Fahrzeuges über seine Drehzahlgrenze geschleppt werden. Dies wird gemäß der DE 43 26 862 A1 dadurch verhindert, daß ein Sensor für die Getriebedrehzahl, d.h. für die Drehzahl des Ausganges der zwischen Motor und Getriebe angeordneten Kupplung, vorgesehen ist. Falls dieser Sensor eine übermäßige Betriebsdrehzahl meldet, wird die Kupplung nur in einen Schlupfzustand mit schwachem Kupplungsmoment gebracht, derart, daß einerseits ein Überdrehschutz des Motors gewährleistet werden kann und sich andererseits das Bremsmoment des Motors noch in gewissem Umfange ausnutzen läßt.

Wenn die Steuerung der Kupplung, insbesondere bei einer Notsteuerung, in Abhängigkeit von der Stellung der Drosselklappe des Motors erfolgt, d.h. wenn die Kupplung bei sich schießender Drosselklappe geöffnet und bei sich öffnender Drosselklappe geschlossen wird, kann es zu für den Motor gefährlichen Betriebszuständen kommen, wenn das Fahrzeug bei geöffneter Kupplung mit hoher Geschwindigkeit rollt bzw. eine hohe Geschwindigkeit erreicht und die Kupplung dann bei Öffnung der Drosselklappe schließt. Hier kann der Motor überdreht werden.

Deshalb ist es Aufgabe der Erfindung, eine für den Notbetrieb besonders vorteilhafte Kupplungssteuerung zu schaffen, die eine hohe Sicherheit für den Motor gegen Überdrehen bietet.

Diese Aufgabe wird bei einer Kupplungssteuerung der eingangs angegebenen Art dadurch gelöst, daß die Kupplung öffnet bzw. mit Schlupf arbeitet, sobald die Motordrehzahl einen hohen Schwellwert, welcher etwa der maximal zulässigen Motordrehzahl entspricht, überschreitet.

Die Erfindung berücksichtigt also die Tatsache, daß bei einer von der Drosselklappenstellung abhängigen Steuerung der Kupplung - d.h. die Kupplung öffnet sich bei schließender Drosselklappe - längere Betriebsphasen auftreten können, bei denen das Fahrzeug bei geöffneter Kupplung weiterrollt und seine Geschwindigkeit erhöht. Wenn nun der Fahrer das Getriebe trotz der Geschwindigkeitserhöhung nicht in einen höheren Gang (für schnellere Fahrt) umschaltet, bevor er wieder das Fahrpedal betätigt, kann es bei Betätigung des Fahrpedales und entsprechender Öffnung der Drosselklappe sowie dem damit einhergehenden Schließen der Kupplung zu gefährlichen Betriebszuständen für den Motor kommen.

Bei der Nutzung der Motordrehzahl für die Kupplungssteuerung ist vorteilhaft, daß bei heute üblichen Motoren mit elektronischer Motorsteuerung regelmäßig ein Drehzahlsensor vorhanden ist, dessen Signale ohne weiteres auch für die Kupplungssteuerung benutzt werden können. Insofern wird also für die Kupplungssteuerung kein separater Sensor benötigt.

Im übrigen ist bei der Erfindung vorgesehen, auch im Falle einer Notsteuerung soweit als möglich sonstige vorhandene Signale zur Kupplungssteuerung auszunutzen.

So kann gemäß einer bevorzugten Ausführungsform vorgesehen sein, die automatische Kupplung bei verschwindender Fahrgeschwindigkeit mit längerer Schlupfphase und bei größerer Fahrgeschwindigkeit mit kurzer Schlupfphase einzukuppeln bzw. zu öffnen. Durch diese von der Fahrgeschwindigkeit des Fahrzeuges abhängige Arbeitsweise der Kupplung werden längere Schlupfphasen nur bei sehr langsamer Fahrgeschwindigkeit möglich, wie sie für den Anfahrvorgang- eines Fahrzeuges typisch sind. Bei normalen Fahrgeschwindigkeiten kann dann durch sehr kurze Schlupfphasen die andernfalls mögliche Erwärmung der Kupplung vermieden werden. Ein Fahrgeschwindigkeitssignal steht über den Geschwindigkeitsmesser des Fahrzeuges regelmäßig zur Verfügung.

In besonders zweckmäßiger Ausgestaltung der Erfindung betätigt das Fahrpedal in seiner Ruhelage einen Leerlaufschalter, wobei dann das davon erzeugte Leerlaufsignal als Befehl zum Öffnen der Kupplung verarbeitet werden kann. Damit wird der Tatsache Rechnung getragen, daß die Drosselklappe bei heutigen elektronischen Motorsteuerungen nicht allein vom fahrerseitig betätigten Fahrpedal gesteuert wird und deshalb nicht immer ihre Schließlage einnimmt, wenn das Fahrpedal unbetätigt ist. Durch Ausnutzung des Leerlaufsignales wird ein besonders eindeutiges Kriterium zum Öffnen der Kupplung herangezogen. Insbesondere ist gewährleistet, daß der Fahrer - zumindest beim Notbetrieb - immer ein Öffnen der Kupplung dadurch erreichen kann, daß er den Fuß vom Fahrpedal abhebt.

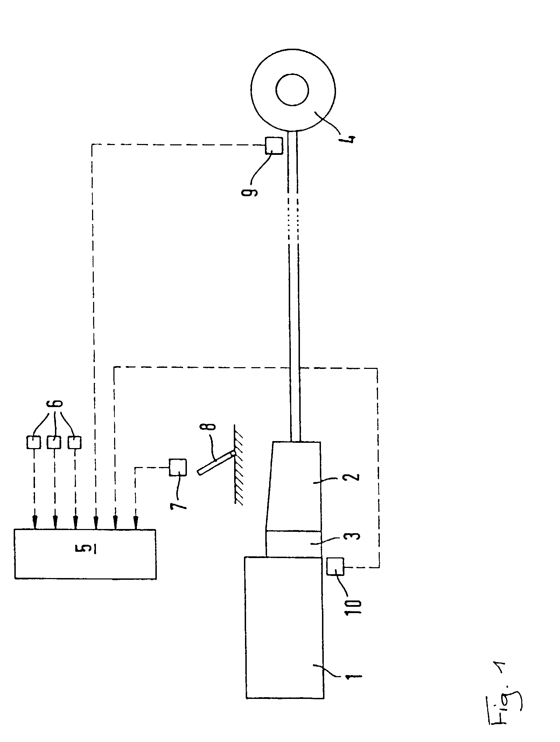

Nachfolgend wird die Erfindung noch anhand der Zeichnung näher erläutert.

Dabei zeigt die einzige Figur in schematisierter Form den Antriebstrang eines Kraftfahrzeuges.

Ein Fahrzeugmotor 1 ist über ein manuell geschaltetes Getriebe 2 sowie eine automatisch arbeitende Kupplung 3 mit Antriebsrädern 4 des im übrigen nicht dargestellten Fahrzeuges verbunden.

Die Kupplung wird mittels einer elektronischen Steuerung 5 betätigt, die normalerweise dazu die Signale verschiedener Sensoren 6 auswertet. Wenn dagegen die Signale dieser Sensoren aufgrund eines Defektes nicht zur Verfügung stehen, arbeitet die Steuerung 5 in einer Notbetriebsweise.

Dazu wird zunächst das Signal eines Leerlaufschalters 7 genutzt, der von einem zur Steuerung der Motorleistung dienenden Fahrpedal 8 aktiviert wird, sobald das Fahrpedal 8 seine Ausgangslage einnimmt, in die es durch eine Rückstellfeder gedrängt wird.

Sobald der Leerlaufschalter 7 ein Signal erzeugt, d.h. wenn das Fahrpedal 8 nicht betätigt wird bzw. seine Ausgangslage einnimmt, wird die Kupplung 3 beim Notbetrieb in jedem Falle geöffnet.

Des weiteren wird das Signal eines Fahrgeschwindigkeitsmessers 9 ausgewertet, und zwar derart, daß die Kupplung 3 bei sehr niedriger Fahrgeschwindigkeit bzw. bei verschwindender Fahrgeschwindigkeit sehr weich mit längerer Schlupfphase einkuppelt, während bei höherer Fahrgeschwindigkeit oberhalb einer Kriechgeschwindigkeit mit sehr kurzer Schlupfphase eingekuppelt wird.

Schließlich wird noch das Signal eines dem Fahrzeugmotor 1 zugeordneten Drehzahlgebers 10 dahingehend ausgenutzt, daß die automatische Kupplung 3 öffnet bzw. offenbleibt oder zumindest in einen Schlupfzustand übergeht, sobald die Motordrehzahl einen hohen Schwellwert, welcher etwa der maximal zulässigen Motordrehzahl entspricht, überschreitet. Auf diese Weise wird gewährleistet, daß ein Fahrzeug, welches bei geöffneter Kupplung etwa auf einer Gefällestrecke eine größere Geschwindigkeit erreicht hat, den Motor nicht auf überhöhte Drehzahl bringen kann.

Die Kupplung 3 schließt jeweils automatisch, wenn keines der vorgenannten Signale zum Öffnen bzw. zur Offenhaltung der Kupplung 3 vorliegt.

## Patentansprüche

1. Steuerung (5) einer im Antriebstrang (1,2,3,4) eines Kraftfahrzeuges mit fahrerseitig bzw. manuell geschaltetem Getriebe (2) angeordneten automatischen Kupplung (3), zu deren Betätigung die Steuerung mit einer Sensorik (6,7,8,9) zur Erkennung von Parametern, die auf eine Schaltabsicht des Fahrers hindeuten, zusammenwirkt, wobei die Kupplung zumindest im Falle einer Notsteuerung bei gestörter Sensorik bei sich schließender Drosselklappe des Fahrzeugmotors öffnet und bei sich öffnender Drosselklappe schließt, und wobei zumindest im Falle dieser Notsteuerung der Kupplung außerdem Signale eines dem Fahrzeugmotor (1) zugeordneten, die Drehzahl des Fahrzeugmotors erfassenden Drehzahlsensors (10) zur Kupplungssteuerung heranziehbar sind,
**dadurch gekennzeichnet,**
daß die Kupplung öffnet bzw. mit Schlupf arbeitet, sobald die Motordrehzahl einen hohen Schwellwert, welcher etwa der maximal zulässigen Motordrehzahl entspricht, überschreitet.

2. Steuerung nach Anspruch 1, **dadurch gekennzeichnet,** daß die Kupplung (3) bei verschwindender Fahrgeschwindigkeit mit längerer Schlupfphase und bei größerer Fahrgeschwindigkeit mit sehr kurzer Schlupfphase einkuppelt.

3. Steuerung nach Anspruch 1 oder 2,
**dadurch gekennzeichnet,**
daß einem fahrerseitig betätigten Fahrpedal (8) ein bei unbetätigtem Fahrpedal betätigter Leerlaufsignalschalter (7) zugeordnet ist, wobei die Kupplung bei Auftreten eines Leerlaufsignals geöffnet wird.

4. Steuerung nach einem der Ansprüche 1 bis 3,
**dadurch gekennzeichnet,**
daß die Kupplung (3) öffnet, wenn eine Motorsteuerung ein Leerlaufsignal erzeugt.

5. Steuerung nach einem der Ansprüche 1 bis 4,
**dadurch gekennzeichnet,**
daß der Drehzahlsensor (10) als Teil einer Motorsteuerung für den Fahrzeugmotor angeordnet beziehungsweise ausgebildet ist.

## Claims

1. A control system (5) of an automatic clutch (3) which is arranged in the drive train (1,2,3,4) of a motor vehicle with a driver or manual shift transmission (2) and for the actuation of which the control system interacts with a sensor system (6,7,8,9) for identifying parameters which indicate a shift intention on the part of the driver, the clutch, at least in the event of emergency control when the sensor system is disrupted, disengaging when the throttle valve of the vehicle engine closes, and engaging when the throttle valve opens, and it being possible, at least in the event of this emergency control of the clutch, additionally to use signals from a speed sensor (10) for the clutch control, which speed sensor is assigned to the vehicle engine (1) and acquires the speed of the vehicle engine,
**characterized in that**
the clutch disengages or operates with slip, as soon as the engine speed exceeds a high threshold value, which approximately corresponds to the maximum permissible engine speed.

2. The control system as claimed in claim 1,
**characterized in that**
the clutch (3) engages with a relatively long slip phase in the event of a vanishing driving speed and with a very short slip phase in the event of a relatively high driving speed.

3. The control system as claimed in claim 1 or 2,
**characterized in that**
an accelerator pedal (8) actuated by the driver is assigned an idling signal switch (7), which is actuated when the accelerator pedal is not actuated, the clutch being disengaged when an idling signal occurs.

4. The control system as claimed in one of claims 1 to 3,
**characterized in that**
the clutch (3) disengages when an engine controller generates an idling signal.

5. The control system as claimed in one of claims 1 to 4,
**characterized in that**
the speed sensor (10) is arranged or designed as part of an engine controller for the vehicle engine.

## Revendications

1. Commande (5) d'un embrayage (3) automatique, disposé dans le train d'entraînement (1, 2, 3, 4) d'un véhicule automobile, avec une boîte de vitesses (2) située côté conducteur, respectivement à manoeuvre manuelle, embrayage pour l'actionnement duquel la commande coopère avec une sensorique (6, 7, 8, 9) destinée à l'identification de paramètres indicatifs d'une intention de manoeuvre du conducteur, l'embrayage s'ouvrant au moins dans le cas d'une commande d'urgence lorsqu'il y a mise en dérangement de la sensorique, lorsque le clapet d'étranglement du moteur du véhicule se ferme, et se fermant lorsque le clapet d'étranglement s'ouvre, et, au moins dans le cadre de cette commande d'urgence de l'embrayage, en outre, des signaux d'un capteur de vitesse de rotation (10), associé au moteur (1) du véhicule automobile, appréhendant la vitesse de rotation du moteur, étant utilisables pour assurer la commande de l'embrayage, caractérisée en ce que l'embrayage s'ouvre, respectivement travaille avec un glissement, dès que la vitesse de rotation moteur dépasse une valeur de seuil haute, qui correspond à peu près à la vitesse de rotation maximale admissible du moteur.

2. Commande selon la revendication 1, caractérisée en ce que l'embrayage (3) procède au désaccouplement avec une phase de glissement longue, lorsque la vitesse de roulage est en diminution, et avec une phase de glissement très courte, lorsque la vitesse de roulage est en augmentation.

3. Commande selon la revendication 1 1 ou 2, caractérisée en ce qu'à une pédale d'accélérateur (8), actionnée côté conducteur, est associé un interrupteur de signal de ralenti (7), actionné lorsque la pédale d'accélérateur n'est pas actionnée, l'embrayage étant ouvert lorsqu'un signal de ralenti se manifeste.

4. Commande selon l'une des revendications 1 à 3, caractérisée en ce que l'embrayage (3) s'ouvre lorsqu'une commande moteur génère un signal de ralenti.

5. Commande selon l'une des revendications 1 à 4, caractérisée en ce que le capteur de vitesse de rotation (10) est disposé, respectivement réalisé sous la forme de partie d'une commande moteur destinée au moteur de véhicule.
